# FASCICULE DE BREVET EUROPEEN

(11) **EP 3 172 043 B1**
(45) Date de publication et mention de la délivrance du brevet: **12.02.2020**
(21) Numéro de dépôt: 15753390.2
(22) Date de dépôt: 10.07.2015
(51) Int. Cl.: B29D 30/06, B22F 3/105, B22F 5/00, B29C 33/10, B33Y 80/00

(54) **MOULE POUR LA VULCANISATION D'UN PNEUMATIQUE COMPORTANT DES ÉLÉMENTS MOBILES OBTENUS PAR FRITTAGE LASER**
REIFENVULKANISIERFORM MIT BEWEGBAREN, MIT LASERSINTERTECHNIK HERGESTELLTEN ELEMENTEN
TIRE CURING MOULD COMPRISING MOVEABLE ELEMENTS OBTAINED BY LASER SINTERING

(30) Priorité: 22.07.2014 FR 1457062
(43) Date de publication de la demande: 31.05.2017
(73) Titulaire: Compagnie Générale des Etablissements Michelin, 63000 Clermont-Ferrand (FR)
(72) Inventeur: CALVEL, Romain, F-63040 Clermont-Ferrand Cedex 9 (FR); GUEUGNEAU, Anthony, F-63040 Clermont-Ferrand Cedex 9 (FR)
(74) Mandataire: Roussy, Delphine
(86) Numéro de dépôt international: PCT/FR2015/051908
(87) Numéro de publication internationale: WO 2016/012690

(56) Documents cités:
- WO-A1-2014/060208
- DE-A1-102004 052 766
- DE-C1- 19 543 276
- GB-A- 922 788
- US-A- 5 939 101
- US-A1- 2009 053 354
- US-B1- 6 871 831

## Description

La présente invention se rapporte à des éléments mobiles disposés dans une garniture.

Généralement ces éléments mobiles doivent être montés dans la garniture, comme par exemple un moule ou plus particulièrement un moule de fabrication de pneumatiques, ce qui nécessite une étape spécifique qui allonge le processus de fabrication. Ceci est d'autant plus critique que les pièces sont de petite taille, car cela contraint à un réglage minutieux qui augmente encore le temps de fabrication et donc son coût. Il faut également prévoir un système de maintien de la pièce dans la garniture afin d'éviter qu'elle ne s'échappe.

Cet élément mobile dans une garniture peut être par exemple une éventation par soupapes mobiles pour l'évacuation de l'air et qui se ferment ensuite au contact de la gomme sans laisser de tétine sur la gomme. Le document US 5 939 101 A, par exemple, divulgue un moule pour la vulcanisation d'un pneumatique comprenant une garniture pour le moulage de la bande de roulement de ce pneumatique selon le préambule de la revendication 1.

L'objet de la présente invention est de proposer un élément mobile fabriqué in situ et qui ne nécessite ni montage spécifique, ni système de maintien.

Le moule pour la vulcanisation d'un pneumatique selon l'invention comprend une garniture pour le moulage de la bande de roulement de ce pneumatique, qui comprend une soupape mobile destinée à assurer une éventation du moule, il est caractérisé en ce que la soupape est d'un seul tenant, cette soupape étant guidée dans une partie de guidage appartenant à la garniture et en butée de part et d'autre de cette partie de guidage pour limiter le mouvement de la soupape dans la garniture et en ce que cette soupape et cette partie de guidage sont réalisées dans un même matériau. La soupape mobile ainsi réalisée est monobloc et non démontable de la partie de guidage, ce qui permet un gain de temps et une meilleure précision de positionnement; elle est retenue dans la partie de guidage par deux butées, et comme elle est réalisée dans le même matériau que la partie de guidage, elles peuvent être réalisées en même temps. Le moule comprend en général plusieurs soupapes pour évacuer l'air emprisonné lors du moulage du pneu.

Selon une disposition particulière, la partie de guidage appartient à une cheminée apte à être désolidarisée du reste de la garniture. Elle est ainsi apte à être rapportée dans un moule réalisé dans un matériau différent du moule qui peut être en aluminium par exemple.

Avantageusement, la soupape a un corps principal, une extrémité inférieur et une extrémité supérieure plus larges que le corps principal, chaque extrémité présentant un diamètre équivalent d1, la partie de guidage présentant un diamètre équivalent D2, et en ce que d1 est supérieur à D2 de sorte que la soupape puisse venir en butée avec la partie de guidage. La soupape est ainsi retenue dans la partie de guidage par ses deux extrémités qui ont un bord périphérique de forme quelconque. Ce bord défini un diamètre équivalent à celui d'un cercle contenant ce bord, ce qui signifie que le diamètre équivalent correspond à la plus grande dimension du bord.

Avantageusement, la soupape est apte à prendre une position ouverte et une position fermée et qu'elle est configurée pour être affleurante en position fermée. Ainsi la partie de guidage est surmontée par une première zone de diamètre équivalent D1, l'extrémité supérieure de la soupape a un diamètre équivalent d1 tel que d1<D1. L'extrémité supérieure qui définit la tête de la soupape est ainsi affleurante en position fermée.

Avantageusement, les extrémités sont coniques évasées vers lesdites extrémités. La soupape peut ainsi plus facilement se positionner dans la première zone de l'orifice, la forme évasée permet de diriger l'extrémité dans l'orifice.

Avantageusement, la soupape mobile a une partie guidée de hauteur h2 et que la zone du deuxième diamètre D2 a une hauteur H2 plus faible que la hauteur h2. La différence de hauteur de la partie guidée et de la zone de diamètre D2 de la partie de guidage définit le débattement de la soupape dans la partie de guidage. La hauteur h2 de la soupape mobile étant plus longue que la hauteur H2 de la partie de guidage de l'orifice dans lequel il est placé, la soupape mobile peut donc bouger d'une amplitude égale à la différence entre les deux hauteurs h2 et H₂.

Selon une disposition particulière le corps principal et les extrémités de la soupape sont cylindriques. Cette forme est particulièrement adaptée quand la partie de guidage et la première zone sont de préférence également cylindriques.

Selon une autre disposition le corps principal est non cylindrique. Il pourra par exemple être rectangulaire, carré ou triangulaire. Dans ce cas la partie de guidage et la première zone seront de préférence également non cylindrique, soit rectangulaire, carré ou triangulaire.

Selon une disposition particulière, l'extrémité supérieure de la soupape a une face supérieure avec au moins un trou non débouchant. Le trou est, de préférence, central situé du côté face moulante, il constitue un système d'accroche pour ouvrir les soupapes mobiles après moulage du pneu. En effet, contrairement aux soupapes de l'état de la technique, les soupapes mobiles selon l'invention n'ont pas de ressort de rappel, ici cette fonction est générée par la pénétration de la gomme dans le trou central non débouchant qui, au démoulage, va tirer la soupape vers le haut pour l'ouvrir. Ce trou peut être droit, avec contre dépouille, en queue d'aronde, avoir une empreinte multi forme (cruciforme, multi trou ...), il va servir également au système de nettoyage de l'orifice en faisant bouger la soupape mobile pour dégager la gomme ou autre résidu qui pourrait être y être bloqué. Ceci sera fait soit par une rotation via le trou coté intérieur du moule sur le dessus de la soupape mobile avec un outil standard de type tournevis, visseuse ou outillage spécifique. Il est également possible de disposer un aimant dans le trou pour réaliser une rotation grâce à un aimant bipolaire ou un électro aimant.

Selon une autre disposition l'extrémité inférieure de la soupape a une face inférieure avec un trou central, au moins en partie conique. La face inférieure correspond à la face côté plateau de fabrication. Le trou, qui peut être conique, permet de réduire le volume de la soupape (gain de temps, de poids et de coût fabrication) et facilite la fabrication car cela permet de monter la face côté plateau avec un minimum de support. Il suffit de soutenir juste l'extrémité inférieure de la soupape et le reste de l'extrémité se fabrique sans support grâce à un angle de fabrication (> 25°), ce qui évite un support très large qui est difficile ensuite à désolidariser de la soupape. Le trou extérieur peut aussi servir au système de nettoyage de l'orifice en faisant bouger la soupape mobile pour dégager la gomme ou autre résidu qui pourrait être y être bloqué, ceci sera fait par un outil type cruciforme, 6 pans creux,...

Le procédé de fabrication d'une soupape mobile dans une garniture ou un élément de moule selon l'invention, est caractérisé en ce que la garniture ou la cheminée, la soupape mobile et la partie de guidage sont réalisées au cours d'une même opération de frittage laser de poudres. Les possibilités offertes par le procédé de frittage laser permettent d'envisager de réaliser ce type de soupapes mobiles sans avoir à les assembler. Il suffit de laisser un jeu lors de la fabrication allant de 0,05mm à 1mm. On laisse un jeu entre les parties mobiles (entre 0,1 et 0,5mm préférentiellement 0,23mm) et on réalise des supports de soutien de la partie mobile que l'on vient casser ensuite pour libérer la mobilité. Les supports des soupapes mobiles ont une surface d'accroche individuelle sur la soupape mobile très faible, suffisante pour permettre le soutien de la soupape lors de fabrication, mais suffisamment faible pour casser facilement après fabrication. La soupape est fabriquée en même temps que la garniture, ou en même temps que la cheminée selon sa disposition.Avantageusement, un support maintient la soupape en position mi-ouverte. Les supports de maintien de la soupape pendant la fabrication sont dimensionnés de telle façon que le corps principal de la soupape soit distante de la partie de guidage et que les extrémités soient distantes des cotés de l'orifice de façon à ce que la soupape puisse facilement être désolidarisée de la garniture à laquelle elle est liée.

Avantageusement, on laisse une épaisseur de poudre d'au moins 0,1mm non lasée entre la soupape et la partie de guidage. L'espace où la poudre n'est pas frittée par laser laisse un espace libre entre les pièces qui peuvent ainsi bouger l'une par rapport à l'autre. L'épaisseur de 0,1mm est suffisante pour que si une partie est lasée le lien sera suffisamment faible pour casser facilement lorsque l'on essaiera de bouger une des pièces.

D'autres avantages pourront encore apparaître à l'homme du métier à la lecture des exemples ci-dessous, illustrés par les figures annexées, donnés à titre d'exemple :
- La figure 1 représente une vue en perspective d'un moule selon l'invention,
- La figure 2 est une vue en perspective d'une deuxième variante de moule selon l'invention,
- La figure 3 représente une vue en perspective d'une troisième variante de moule selon l'invention,
- La figure 4 est une coupe de la soupape mobile,
- La figure 5 est une vue en coupe de l'orifice,
- Les figures 6 et 7 sont des vues en coupe et en perspective d'un premier exemple de trou sur la soupape mobile,
- Les figures 8 et 9 sont des vues en coupe et en perspective d'un deuxième exemple de trou sur la soupape mobile,
- Les figures 10 à 13 sont d'autres exemples de trous sur la soupape mobile,
- Les figures 14 et 15 sont des vues en coupe et en perspective d'un autre exemple de trou sur la soupape mobile.
- La figure 16 est une vue en coupe de la soupape,
- La figure 17 représente différentes section de la soupape de la figure 16,
- La figure 18 est une vue en coupe du moule de la figure 1,
- La figure 19 est une vue en coupe du moule de la figure 2,
- La figure 20 est une vue en coupe du moule avec la soupape lors de la fabrication.

Dans la description on considèrera que le haut correspond au haut des figures et le bas au bas des figures.

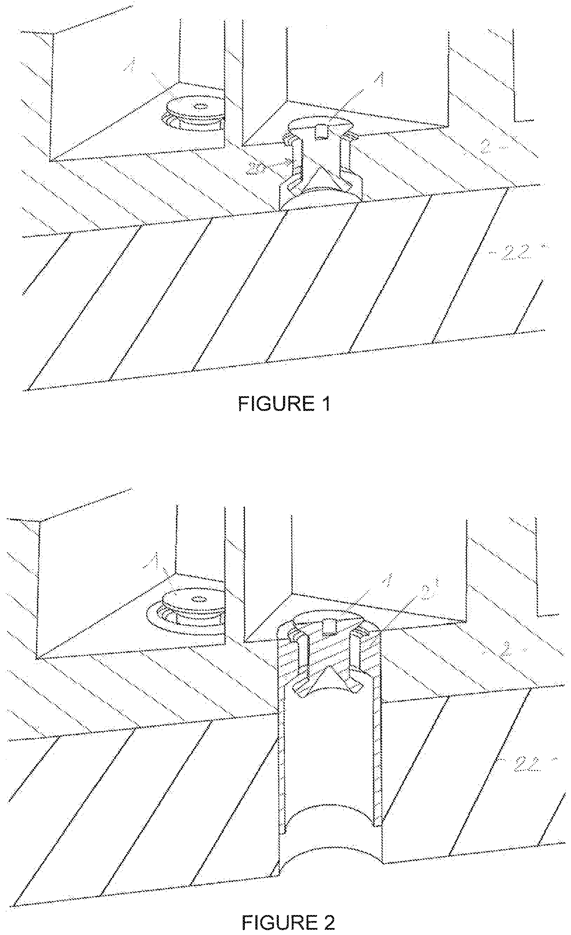

L'ensemble illustré à la figure 1 comprend une soupape mobile 1 disposée dans une garniture 2 et un moule 22. La garniture 2 comprend un orifice 20 dans lequel est disposée la soupape 1. La soupape 1 est en une seule pièce (d'un seul tenant) et n'est pas démontable de la garniture 2. La garniture 2 est placée dans le moule 22.

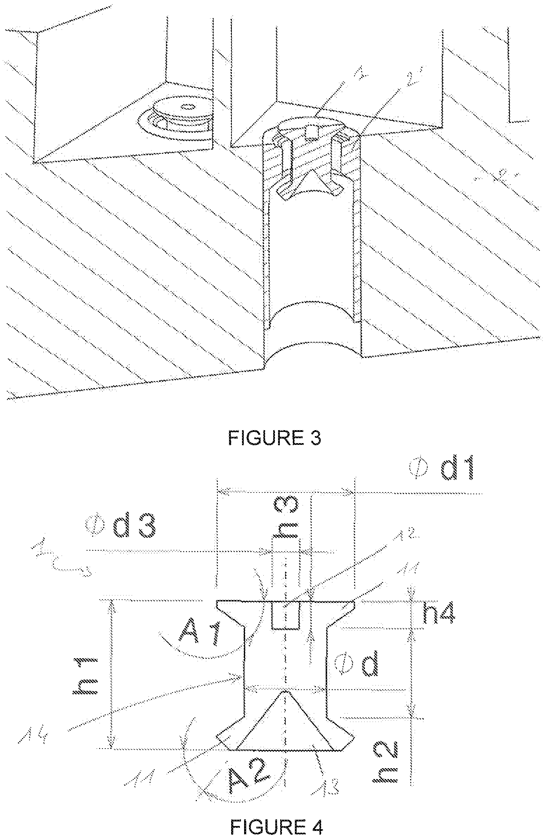

Dans la variante de la figure 2, la soupape mobile 1 est placée dans une cheminée 2'. Ici encore, la soupape 1 est d'une seule pièce et n'est pas démontable. La cheminée 2' est destinée à être disposé dans une garniture 2. Le moule 22 peut être du même matériau que la soupape et la cheminée (figure 2) ou d'un matériau différent comme de l'aluminium (figure 3).

A la figure 4, on a représenté les caractéristiques d'un exemple de soupape mobile 1. Cette soupape mobile 1 a un diamètre cylindrique d avec des extrémités 11 de diamètre d₁, sa hauteur totale est h₁ et la hauteur correspondant à la partie cylindrique h₂. Les extrémités 11 sont coniques et évasées vers l'extérieur avec un angle A1 pour l'extrémité supérieure et un angle A2 pour l'extrémité inférieure. La soupape 1 présente un trou 12 de diamètre d₃ et de hauteur h₃. Il présente également un évidement 13 en partie inférieure. La partie de diamètre d constitue une partie guidée 14.

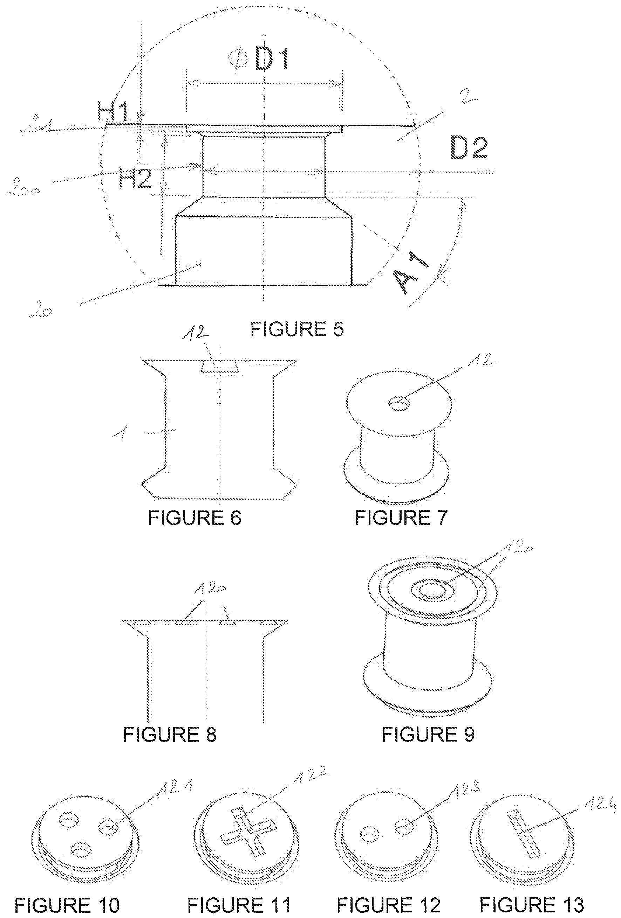

La figure 5 montre le moule 2 avec l'orifice 20. L'orifice 20 est de forme sensiblement cylindrique avec une zone 201 d'un premier diamètre D₁ en partie supérieure et une zone 200 d'un deuxième diamètre D₂ plus petit que le premier diamètre D₁ en dessous de celui-ci, la zone 200 constitue la partie de guidage de la soupape 1. D₂ est plus grand que le diamètre d de la soupape mobile 1. La première zone 201 a une hauteur H₁ et la deuxième zone 200 a une hauteur H₂.

Les figures 6 et 7 illustrent un exemple de trou 12 avec une contre dépouille, les figures 8 et 9 un trou 120 en queue d'aronde, les figures 10 et 12 multi trous (trois trous 121 ou deux trous 123), la figure 11 le trou 122 est cruciforme, le trou 124 est linéaire à la figure 13.

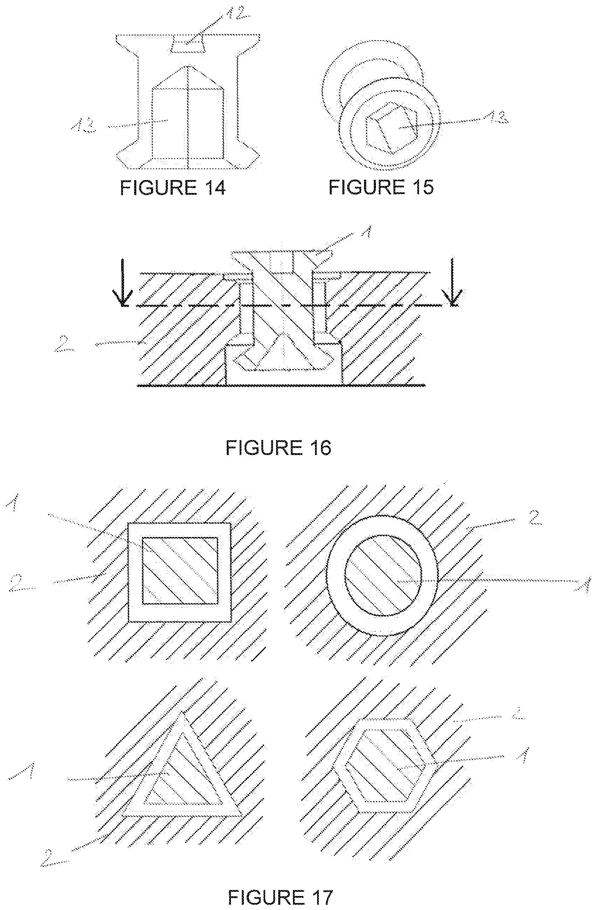

La soupape mobile 1 présente également un évidement 13 en partie basse qui est à six pans creux sur les figures 14 et 15, pour pouvoir l'actionner mais il pourrait aussi être cruciforme et constitue ainsi un système d'accroche.

La soupape illustrée en coupe figure 16 peut avoir un profil rectangulaire, carré, triangulaire ou hexagonal (figure 17), dans ce cas l'orifice a de préférence un profil similaire plus large de quelques dixième de millimètre afin de permettre le mouvement de la soupape.

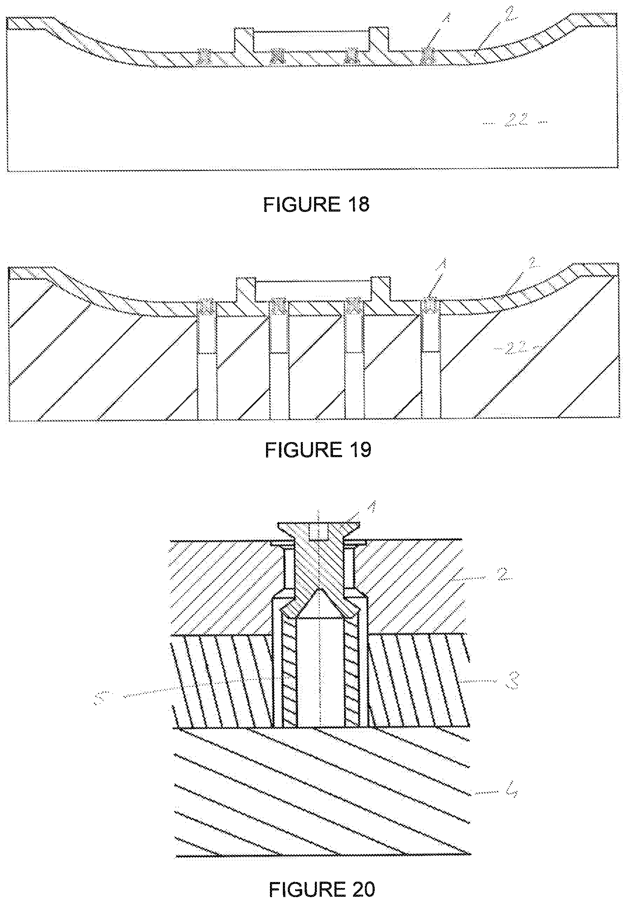

La figure 18 montre une moule 22 complet avec des soupapes 1 selon le mode de réalisation de la figure 1.

La figure 19 montre un moule 22 complet avec des cheminées 2' comme celles illustrées à la figure 2.

Nous allons décrire le procédé de fabrication. La figure 20 montre une soupape dans un support de fabrication, ce support comprend un plateau de fabrication 4, des supports de garniture 3, et des supports de soupape 5. La garniture 2 et la soupape mobile 1 sont réalisés d'un seul tenant par frittage laser de poudres, la soupape mobile 1 est reliée au plateau de fabrication par les supports de soupape 5 afin de réaliser une seule pièce. L'évidement 13 permet de soutenir l'extrémité inférieure de la soupape qui est ainsi de taille réduite et le reste de l'extrémité se fabrique sans support grâce à un angle de fabrication > 25°, ce qui évite l'utilisation d'un support très large pour réaliser une surface inférieure de la soupape rectiligne qui serait difficile ensuite à désolidariser de la soupape.

Les supports 5 comprennent des parties affinées (non représentées) en liaison avec la soupape 1 qui sont cassés et retirés pour pouvoir la rendre mobile. Le trou 12 qui constitue un système d'accroche peut permettre de faire bouger la soupape mobile 1 pour détacher les éléments supports 5 de la soupape mobile 1.

Les supports de garniture 3 sont retirés par usinage de la face arrière de la garniture 2. Les supports 5 peuvent aussi être cassés pendant la phase d'usinage du dos de la garniture 2.

Dans le cas d'une fabrication inclinée de la garniture 2, des supports de soupape 5 ne sont pas forcément nécessaires sous les soupapes. En effet, le jeu de 0,1mm entre la soupape et la garniture peut permettre localement une agglomération de la poudre par diffusion de la chaleur de fusion et donc une accroche locale, cette agglomération sera cassée en faisant bouger la soupape 1.

En utilisation, la soupape mobile 1 est ouverte quand elle est positionnée en position haute et fermée en position basse. Cette soupape mobile 1 permet une éventation dans le moule 22 de fabrication de pneumatique par évacuation de l'air emprisonné lors du moulage du pneu. La soupape mobile 1 est ouverte par adhésion de la gomme sur la soupape mobile 1 ou par pénétration de gomme dans le trou 12 central non débouchant qui au démoulage va le tirer vers le haut.

La fermeture de la soupape mobile 1 est réalisée par la pression de la gomme en contact lors du moulage. La rugosité de surface obtenue par ce procédé permet une légère éventation même après fermeture. Le trou 12 constitue aussi un système de nettoyage, en faisant bouger la soupape mobile 1 pour dégager la gomme ou autre résidu bloqué, on fera tourner via le trou 12 sur le dessus de la soupape mobile 1 avec outil standard type tournevis ou visseuse ou avec un outillage spécifique.

## Revendications

1. Moule (22) pour la vulcanisation d'un pneumatique comprenant une garniture (2) pour le moulage de la bande de roulement de ce pneumatique, une soupape mobile (1) destinée à assurer une éventation du moule, la soupape (1) étant d'un seul tenant, cette soupape (1) étant guidée dans une partie de guidage (200) appartenant à la garniture (2) et en butée de part et d'autre de cette partie de guidage (200) pour limiter le mouvement de la soupape (1) dans la garniture (2), cette soupape (1) et cette partie de guidage étant réalisées dans un même matériau **caractérisé en ce que** la soupape est monobloc et non démontable de la partie de guidage.

2. Moule (22) selon la revendication 1, **caractérisé en ce que** la partie de guidage (200) appartient à une cheminée (2') apte à être désolidarisée du reste de la garniture (2).

3. Moule (22) selon l'une des revendications 1 à 2 **caractérisé en ce que** la soupape (1) a un corps principal, une extrémité inférieure et une extrémité supérieure (11) plus larges que le corps principal, chaque extrémité (11) présentant un diamètre équivalent d1, la partie de guidage (200) présentant un diamètre équivalent D2, et **en ce que** d1 est supérieur à D2 de sorte que la soupape (1) puisse venir en butée avec la partie de guidage (200).

4. Moule (22) selon une des revendications précédentes, **caractérisé en ce que** la soupape (1) est apte à prendre une position ouverte et une position fermée et qu'elle est configurée pour être affleurante en position fermée.

5. Moule (22) selon une des revendications 3 ou 4 **caractérisé en ce que** les extrémités (11) sont coniques évasées vers lesdites extrémités (11).

6. Moule (22) selon une des revendications 3 à 5, **caractérisé en ce que** la soupape mobile (1) a une partie guidée (14) de hauteur h2 et que la zone du deuxième diamètre D₂ a une hauteur H₂ plus faible que la hauteur h2.

7. Moule (22) selon une des revendications 3 à 6, **caractérisé en ce que** le corps principal et la partie de guidage (200) et les extrémités (11) de la soupape sont cylindriques.

8. Moule (22) selon une des revendications 3 à 6, **caractérisé en ce que** le corps principal et la partie de guidage (200) est non cylindrique.

9. Moule (22) selon une des revendications 3 à 8, **caractérisé en ce que** l'extrémité supérieure de la soupape (1) a une face supérieure avec au moins un trou (12) non débouchant.

10. Moule (22) selon une des revendications 3 à 9, **caractérisé en ce que** l'extrémité inférieure de la soupape (1) a une face inférieure avec un trou central (13), au moins en partie conique.

11. Procédé de fabrication d'une soupape mobile (1) d'un moule selon une des revendications précédentes, dans une garniture (2) ou une cheminée (2'), **caractérisé en ce que** la garniture (2) ou la cheminée (2'), la soupape (1) et la partie de guidage (200) sont réalisés au cours d'une même opération de frittage laser de poudres.

12. Procédé selon la revendication précédente **caractérisé en ce que** un support de soupape (5) maintient la soupape (1) en position mi-ouverte lors de la fabrication.

13. Procédé selon une des revendications 11 ou 12 **caractérisé en ce que** on laisse une épaisseur de poudre d'au moins 0,1 mm non lasée entre la soupape (1) et la partie de guidage (200).

## Patentansprüche

1. Form (22) zur Vulkanisation eines Reifens, die einen Formeinsatz (2) zum Formen des Laufstreifens dieses Reifens, ein bewegliches Ventil (1), das dazu bestimmt ist, eine Entlüftung der Form sicherzustellen, umfasst, wobei das Ventil (1) aus einem Stück besteht, wobei dieses Ventil (1) in einem Führungsteil (200) geführt wird, der zum Formeinsatz (2) gehört, und beiderseits dieses Führungsteils (200) zur Anlage kommt, um die Bewegung des Ventils (1) in dem Formeinsatz (2) zu begrenzen, wobei dieses Ventil (1) und dieser Führungsteil aus demselben Material hergestellt sind, **dadurch gekennzeichnet, dass** das Ventil einstückig mit dem Führungsteil ausgebildet und nicht von ihm demontierbar ist.

2. Form (22) nach Anspruch 1, **dadurch gekennzeichnet, dass** der Führungsteil (200) zu einem Abzug (2') gehört, der vom Rest des Formeinsatzes (2) getrennt werden kann.

3. Form (22) nach einem der Ansprüche 1 bis 2, **dadurch gekennzeichnet, dass** das Ventil (1) einen Hauptkörper, ein unteres Ende und ein oberes Ende (11), die breiter als der Hauptkörper sind, aufweist, wobei jedes Ende (11) einen äquivalenten Durchmesser d1 aufweist, wobei der Führungsteil (200) einen äquivalenten Durchmesser D2 aufweist, und dadurch, dass d1 größer als D2 ist, so dass das Ventil (1) an dem Führungsteil (200) zur Anlage kommen kann.

4. Form (22) nach einem der vorhergehenden Ansprüche, **dadurch gekennzeichnet, dass** das Ventil (1) in der Lage ist, eine offene Position und eine geschlossene Position einzunehmen, und dass es dafür ausgelegt ist, in der geschlossenen Position bündig zu sein.

5. Form (22) nach einem der Ansprüche 3 oder 4, **dadurch gekennzeichnet, dass** die Enden (11) konisch erweitert in Richtung der Enden (11) sind.

6. Form (22) nach einem der Ansprüche 3 bis 5, **dadurch gekennzeichnet, dass** das bewegliche Ventil (1) einen geführten Teil (14) mit der Höhe h2 aufweist und dass der Bereich des zweiten Durchmessers D₂ eine Höhe H₂ aufweist, die kleiner als die Höhe h2 ist.

7. Form (22) nach einem der Ansprüche 3 bis 6, **dadurch gekennzeichnet, dass** der Hauptkörper und der Führungsteil (200) und die Enden (11) des Ventils zylindrisch sind.

8. Form (22) nach einem der Ansprüche 3 bis 6, **dadurch gekennzeichnet, dass** der Hauptkörper und der Führungsteil (200) nicht zylindrisch sind.

9. Form (22) nach einem der Ansprüche 3 bis 8, **dadurch gekennzeichnet, dass** das obere Ende des Ventils (1) eine Oberseite mit wenigstens einem Sackloch (12) aufweist.

10. Form (22) nach einem der Ansprüche 3 bis 9, **dadurch gekennzeichnet, dass** das untere Ende des Ventils (1) eine Unterseite mit einem Mittelloch (13) aufweist, das wenigstens teilweise konisch ist.

11. Verfahren zur Herstellung eines beweglichen Ventils (1) einer Form nach einem der vorhergehenden Ansprüche in einem Formeinsatz (2) oder einem Abzug (2'), **dadurch gekennzeichnet, dass** der Formeinsatz (2) oder der Abzug (2'), das Ventil (1) und der Führungsteil (200) in ein und demselben Arbeitsgang des Lasersinterns von Pulvern hergestellt werden.

12. Verfahren nach dem vorhergehenden Anspruch, **dadurch gekennzeichnet, dass** ein Ventilträger (5) das Ventil (1) während der Herstellung in einer halb geöffneten Position hält.

13. Verfahren nach einem der Ansprüche 11 oder 12, **dadurch gekennzeichnet, dass** eine nicht gelaserte Dicke von Pulver von mindestens 0,1 mm zwischen dem Ventil (1) und dem Führungsteil (200) belassen wird.

## Claims

1. Mould (22) for vulcanizing a tyre comprising a lining (2) for moulding the tread of this tyre, a mobile valve (1) intended to vent the mould, the valve (1) being of a single piece, this valve (1) being guided in a guide part (200) belonging to the lining (2) and in abutment on each side of this guide part (200) to limit the movement of the valve (1) in the lining (2), this valve (1) and this guide part being made from the same material, **characterized in that** the valve is of one piece and non-removable from the guide part.

2. Mould (22) according to Claim 1, **characterized in that** the guide part (200) belongs to a vent (2') able to be detached from the rest of the lining (2).

3. Mould (22) according to one of Claims 1 to 2, **characterized in that** the valve (1) has a main body, a lower end and an upper end (11) which are wider than the main body, each end (11) having an equivalent diameter d1, the guide part (200) having an equivalent diameter D2, and **in that** d1 is greater than D2 so that the valve (1) can come into abutment with the guide part (200).

4. Mould (22) according to one of the preceding claims, **characterized in that** the valve (1) is able to adopt an open position and a closed position and **in that** it is configured to lie flush in the closed position.

5. Mould (22) according to one of Claims 3 and 4, **characterized in that** the ends (11) are conical, widening towards the said ends (11).

6. Mould (22) according to one of Claims 3 to 5, **characterized in that** the mobile valve (1) has a guided part (14) of height h2 and that the zone of the second diameter D₂ has a height H₂ that is smaller than the height h2.

7. Mould (22) according to one of Claims 3 to 6, **characterized in that** the main body and the guide part (200) and the ends (11) of the valve are cylindrical.

8. Mould (22) according to one of Claims 3 to 6, **characterized in that** the main body and the guide part (200) is non-cylindrical.

9. Mould (22) according to one of Claims 3 to 8, **characterized in that** the upper end of the valve (1) has an upper face with at least one blind hole (12).

10. Mould (22) according to one of Claims 3 to 9, **characterized in that** the lower end of the valve (1) has an underside face with a central hole (13) that is at least partially conical.

11. Method for manufacturing a mobile valve (1) of a mould according to one of the preceding claims, in a lining (2) or a vent (2'), **characterized in that** the lining (2) or the vent (2'), the valve (1) and the guide part (200) are produced during one and the same powder laser sintering operation.

12. Method according to the preceding claim, **characterized in that** a valve support (5) holds the valve (1) in the part-open position during manufacture.

13. Method according to one of Claims 11 and 12, **characterized in that** an at least 0.1 mm thickness of non-fused powder is left between the valve (1) and the guide part (200).
